# EUROPÄISCHE PATENTSCHRIFT

(11) **EP 4 015 718 B1**
(45) Veröffentlichungstag und Bekanntmachung des Hinweises auf die Patenterteilung: **07.06.2023**
(21) Anmeldenummer: 21215620.2
(22) Anmeldetag: 17.12.2021
(51) Int. Cl.: E03B 9/02, E03C 1/10, F16K 31/60, E03B 7/10

(54) **FROSTSICHERES AUSSENWAND-ZAPFVENTIL MIT SYSTEMTRENNER**
FROST-PROOF EXTERNAL WALL TAP WITH SYSTEM DISCONNECTOR
ROBINET DE DISTRIBUTION POUR PAROI EXTÉRIEURE RÉSISTANT AU GEL POURVU DE SÉPARATEUR SYSTÈME

(30) Priorität: 18.12.2020 DE 102020134275
(43) Veröffentlichungstag der Anmeldung: 22.06.2022
(73) Patentinhaber: Heinrich Schulte & Sohn GmbH & Co. KG, 57462 Olpe (DE)
(72) Erfinder: de Gruyter, Henning, 57462 Olpe (DE)
(74) Vertreter: Weeg, Thomas

(56) Entgegenhaltungen:
- EP-A1- 3 135 829
- KR-Y1- 200 180 790
- US-A- 5 129 416

## Beschreibung

Die vorliegende Erfindung bezieht sich auf ein Außenwand-Zapfventil mit einem Ventilkörper, dessen zulaufseitiger Leitungsschaft einen um mehrere cm verlängerten Leitungsabschnitt aufweist, der im Einbauzustand eine in die Gebäudewand hineinreichende Leitungsstrecke ausbildet, einem an der im Einbauzustand nach außen weisenden Seite des Außenwand-Zapfventils angeordneten Drehgriff, der drehfest mit einer im Ventilkörper gelagerten Gewindehülse verbunden ist, die an ihrem dem Drehgriff abgewandten Ende auf eine bewegliche Betätigungsstange mit einem damit verbundenen Verschließelement einwirkt, einem Ventilsitz, der in der dem Drehgriff abgewandten Hälfte des Leitungsschaftes im Ventilkörper angeordnet ist, das mit der Betätigungsstange bewegliche Verschließelement bildet, wenn es sich in der Schließstellung befindet, mit dem Ventilsitz zusammenwirkend einen Leitungsverschluss, und im ablaufseitigen Ende des Ventilkörpers ist ein Systemtrenner vor einem ablaufseitigen Anschluss angeordnet, der ein Durchlaufventil aufweist, das einen Flüssigkeitsablauf aus dem Ventilkörper zulässt und einen Zulauf von Flüssigkeit aus dem Anschluss in den Ventilkörper sperrt.

Aus der Schrift DE 34 02 484 A1 ist es bekannt, ein Außenwand-Zapfventil mit einem Ventilkörper zu versehen, der bis in eine Außenmauer eines Gebäudes hinein verlängert ist oder sogar durch die Außenwand hindurch bis in das Gebäudeinnere hineinreicht, um den Ventilsitz des Zapfventils in einen Bereich hinter der Frostgrenze in der Außenmauer zu verlagern. Die ebenfalls verlängerte Betätigungsstange, die in dieser Schrift als eine Drehspindel ausgestaltet ist, reicht vom Drehgriff bis zum Ventilsitz und bewegt sich je nach Drehrichtung des Drehgriffs auf den Ventilsitz zu oder davon weg, um den Austritt von Wasser zu ermöglichen oder das Ventil zu schließen.

Eine ähnliche Version eines Außenwand-Zapfventils, bei der der Ventilsitz im Inneren der Außenwand liegt, ist aus der Schrift DE 101 10 585 C1 bekannt. Bei dieser Version ist an das Auslaufrohr ein Anschlussstück angesetzt, in das als Durchlaufventil eine Ventilfeder und ein Verschließelement eingesetzt sind, die als Rückflussverhinderer wirken. Der Rückflussverhinderer ist vor einem ablaufseitigen Anschluss angeordnet und weist ein Durchlaufventil auf, das einen Flüssigkeitsablauf aus dem Ventilkörper zulässt und einen Zulauf von Flüssigkeit aus dem Anschluss in den Ventilkörper sperrt. Der Rückflussverhinderer wirkt so als Systemtrenner.

Die Schrift US 5 129 416 zeigt ein Aussenwand-Zapfventil mit einem Hauptventil sowie zwei Rückschlagventilen. Eines der Rückschlagventile wird mittels einer Erhebung an der Spindel des Hauptventils geöffnet, sobald die Spindel das Hauptventil schliesst. Somit kann verbliebenes Wasser aus dem Aussenwand-Zapfventil abgelassen werden.

Bei einer Kombination eines Außenwand-Zapfventils mit einem in der Außenwand liegendem Ventilkörper und einem Systemtrenner bleibt das Problem, dass zwar der Bereich des Ventilsitzes frostfrei gehalten werden kann, aber die Entwässerung des Ventilkörpers immer noch zusätzlicher Maßnahmen bedarf. Insbesondere bei der Kombination eines innenliegenden Ventilsitzes mit einem stromabwärts montierten Systemtrenner bleibt das zwischen dem Ventilsitz und dem Systemtrenner im Ventilkörper stehende Wasser in der Leitung, weil es nicht abfließen kann. Dort kann es bei Minusgraden der umgebenen Außenluft Frostschäden am Ventilkörper, der Wasserleitung und/oder am Systemtrenner verursachen.

Es ist die Aufgabe der vorliegenden Erfindung, ein mit einem Systemtrenner kombinierten Außenwand-Zapfventil zu schaffen, das eine einfache Möglichkeit zur Entleerung des Ventilkörpers und der Wasserleitung zwischen dem Ventilsitz und dem Systemtrenner bietet.

Die Aufgabe wird mit einem gattungsgemässen Außenwand-Zapfventil gemäss Anspruch 1 gelöst. Der Drehgriff ist drehfest mit einer Gewindehülse verbunden, die mit ihrem Außengewinde in einem ventilkörperseitigen Innengewinde in einer axialen Richtung drehbeweglich gehalten ist, die Gewindehülse weist einen Aufnahmeraum auf, in dem ein in axialer Richtung beweglicher Ventilstift angeordnet ist, der von einer im Aufnahmeraum befindlichen, in axialer Richtung kompressiblen Feder gegen einen im Aufnahmeraum ausgebildeten Ventilsitz in einer ersten Stellung relativ zur Gewindehülse gedrückt gehalten ist, im Aufnahmeraum ist eine ringförmig umlaufende Verengung des Innendurchmessers zur benachbarten Innenoberfläche des Aufnahmeraums ausgebildet, an deren Oberfläche der Ventilstift in seiner ersten Stellung mit einer am Ventilstift angeordneten Gleitdichtung dichtend anliegt, bei einer ersten Einschraubbewegung der Gewindehülse in den Ventilkörper bewegt der in der Gewindehülse befindliche Ventilstift die Betätigungsstange aus einer Offenstellung in eine Schließstellung, in der der Leitungsverschluss geschlossen ist, in der Schließstellung der Betätigungsstange bildet diese einen Anschlag für den Ventilstift, durch die der Ventilstift gegen eine fortgesetzte Bewegung in axialer Richtung blockiert ist, nach einer über die erste Einschraubbewegung fortgesetzten zweiten Einschraubbewegung ist die Gewindehülse gegen die Federkraft der kompressiblen Feder verlagert und der Ventilstift tiefer in den Aufnahmeraum hineingedrückt, in der sich der Ventilstift relativ zur Gewindehülse in einer zweiten Stellung befindet, in der zweiten Stellung ist die Gleitdichtung aus der ringförmig umlaufenden Verengung des Innendurchmessers herausgeschoben und zwischen dem Ventilstift und der ringförmig umlaufenden Verengung ein Durchflusskanal freigegeben, die Gewindehülse weist in ihrem von der ringförmig umlaufenden Verengung des Innendurchmessers in Richtung des Drehgriffs abgewandten Abschnitt Entwässerungsöffnungen zur Entwässerung des Aufnahmeraums auf, und zwischen dem Ventilstift und der Innenoberfläche des Aufnahmeraums der Gewindehülse ist ein Durchflusskanal ausgebildet, der in der zweiten Stellung des Ventilstiftes den Innenraum des Ventilkörpers mit den Entwässerungsöffnungen verbindet.

Sind das Durchlaufventil im Systemtrenner und der Leitungsverschluss beide geschlossen, strömt keine Flüssigkeit mehr durch das Außenwand-Zapfventil. Hier befindet sich nur noch Restflüssigkeit im Innenraum des Ventilkörpers, die von dort aber auch nicht abfließen kann, wenn das Durchlaufventil im Systemtrenner geschlossen ist. Dieses öffnet regelmäßig erst dann, wenn im Innenraum des Ventilkörpers ein gewisser Überdruck aufgebaut wurde, mit dem das Durchlaufventil im Systemtrenner aufgestoßen werden kann. Ist der Leitungsverschluss geschlossen, so dass keine Flüssigkeit mehr von der Zulaufseite her in den Ventilkörper einströmt, wird die Flüssigkeit also vom Systemtrenner im Ventilkörper gehalten. Kühlt sich die Flüssigkeit dann auf Temperaturen ab, bei denen ein Phasenwechsel eintritt, könnte der Ventilkörper durch phasenwechselbedingte Volumenänderungen der Flüssigkeit beschädigt werden. Handelt es sich bei der Flüssigkeit beispielsweise um Wasser, so würde das Wasser bei dem Erreichen von Temperaturen von unter 0° C seinen Aggregatzustand von flüssig auf fest wechseln und sein Volumen dabei ausdehnen. Dabei könnte der Ventilkörper aufplatzen.

Bei der vorgeschlagenen Lösung wird der Drehgriff wie bei anderen Wasserarmaturen auch in Aufschraubrichtung aufgedreht, um im gewünschten Umfang Wasser entnehmen zu können. Dabei wird die Gewindehülse mit dem darin befindlichen Ventilstift in axialer Richtung aus dem Ventilkörper herausgedreht. Der Wasserdruck des in der zulaufseitigen Wasserleitung anstehenden Wassers drückt das mit der Betätigungsstange verbundene Verschließelement vom Ventilsitz ab, weil die Betätigungsstange nicht mehr vom Ventilstift in ihrer Schließstellung gehalten ist. Das Wasser läuft dann in den Ventilkörper hinein und durch das Durchlassventil des Systemtrenners aus dem Außenwand-Zapfventil heraus. Um danach den Wasseraustritt aus dem Außenwand-Zapfventil wieder zu verringern oder zu stoppen, wird der Drehgriff im Rahmen der ersten Einschraubbewegung dazu benutzt, den Zulauf von Wasser zu drosseln oder das Außenwand-Zapfventil ganz zu schließen, indem die Gewindehülse mit dem Ventilstift die Betätigungsstange wieder in Richtung der Schließstellung bewegt. Diese Handhabung des Drehgriffs entspricht dabei voll der üblichen Benutzungsweise eines herkömmlichen Wasserkrans.

Die Erfindung sieht allerdings vor, den Drehgriff um eine Entwässerungsmöglichkeit für den Ventilkörper zu ergänzen, die in die Funktion des Drehgriffs integriert ist. Die Kombination aus der Gewindehülse, dem mit einer Gleitringdichtung versehenen Ventilstift, der als Anschlag dienenden Betätigungsstange und der Feder bilden ein Schließventil, das leicht zu öffnen ist, um den Innenraum des Ventilkörpers zu entwässern. An dieser Stelle sei angemerkt, dass es für den Fachmann natürlich als gleichwertig austauschbar anzusehen ist, wenn die Gleitringdichtung nicht am Ventilstift, sondern in der Fläche der Engstelle angeordnet ist.

Die Entwässerungsfunktion wird durch den in das Außenwand-Zapfventil integrierten federgestützten Ventilstift ermöglicht. Beim normalen Auf- und Zudrehen des Drehgriffs bleibt der Ventilstift in seiner ersten Stellung in der Gewindehülse stehen, in der er von der Federspannung der kompressiblen Feder gehalten ist. Die Federspannung der kompressiblen Feder ist dabei so stark, dass sie die Betätigungsstange in ihrer Schließstellung so stark auf den Ventilsitz gepresst hält, dass das Außenwand-Zapfventil in dieser Stellung dicht geschlossen ist. Wird allerdings der Drehgriff gegen die Kraft der kompressiblen Feder weiter eingeschraubt, wird der Ventilstift zunehmend tief in den in der Gewindehülse befindlichen Aufnahmeraum eingedrückt, weil die Betätigungsstange als Anschlag eine weitere synchrone Bewegung des Ventilstifts mit der Gewindehülse blockiert. Bei der Eintauchbewegung des Ventilstifts in den Aufnahmeraum bewegt sich die am Ventilstift angeordnete Gleitdichtung aus dem Bereich der ringförmig umlaufenden Verengung des Innendurchmessers des Aufnahmeraums heraus, so dass der Ventilstift nicht mehr dichtend an der verengten Fläche anliegt. Befindet sich der Ventilstift in dieser zweiten Stellung, kann die sich im Inneren des Ventilkörpers befindliche Flüssigkeit durch den Aufnahmeraum in der Gewindehülse an dem Ventilstift vorbei nach außen ablaufen, so dass sich der Ventilkörper entleert. Mit der zweiten Einschraubbewegung kann der Ventilkörper also weitgehend oder vollständig von der im Innenraum des Ventilkörpers befindlichen Flüssigkeit entleert werden. Dreht man dann über den Drehgriff die Gewindehülse wieder in eine Position, in der sich der Ventilstift in seiner ersten Stellung befindet, ist das Außenwand-Zapfventil wieder normal benutzbar. Hier ist wiederum vorteilhaft, dass das Außenwand-Zapfventil nur dann normal mit der auf-/zu-Funktion nutzbar ist, wenn die Wasserablauf-Funktion zwangsläufig durch den Ventilstift verschlossen ist, und die Wasserablauf-Funktion nur funktioniert, wenn der Leitungsverschluss geschlossen ist. Unnötige Wasserverluste werden auf diese Weise vermieden.

Durch die Gewindehülse mit dem darin integrierten Ventilstift ist es möglich, die im Ventilkörper befindliche Flüssigkeit zumindest teilweise ablaufen zu lassen, so dass sich danach im Inneren des Ventilkörpers eine Luftblase befindet, über die Volumenveränderungen der Flüssigkeit im Ventilkörper zumindest teilweise ausgeglichen werden können. Bei einer geeigneten Anordnung des Ventilkörpers ist es möglich, den Ventilkörper sogar überwiegend oder vollständig zu entleeren, wenn eine Bedienperson den Ventilstift in die zweite Stellung bringt. Frostbedingte Schäden an dem Außenwand-Zapfventil können somit auf einfache Weise verhindert werden, obwohl der Ablauf der im Ventilkörper befindlichen Restflüssigkeit aus dem Außenwand-Zapfventil durch den Systemtrenner systembedingt blockiert ist.

Dabei ist es besonders anwenderfreundlich, dass sich die Handhabung des Außenwand-Zapfventils im Rahmen des normalen Gebrauchs der auf-/zu-Funktionalität nicht verändert. Nur dann, wenn die Entwässerung gewünscht ist, wird der Drehgriff weiter eingeschraubt, was aber auch für sich leicht zu bewerkstelligen ist. Optisch ist die Armatur insgesamt sehr ansprechend, weil die technische Sonderfunktion den von außen sichtbaren Funktionsumfang nicht aufbläht und die Armatur ihre schlichte Grundform behält.

Bei dem Verschließelement des Leitungsverschlusses kann es sich um einen Ventilkegel, eine Dichtscheibe oder ein vergleichbares Dichtelement handeln, das im Bereich der Dichtfläche einen Belag aus einem flexiblen Werkstoff wie beispielsweise Gummi aufweisen kann, um die Abdichtwirkung zu erhöhen.

Nach einer Ausgestaltung der Erfindung weist der Ventilkörper einen rohrförmigen Leitungsabschnitt auf, an dessen zulaufseitigem Ende der Leitungsverschluss ausgebildet und auf dessen entgegengesetztem Ende der Drehgriff aufgesetzt ist, die Betätigungsstange ist als Stange ausgebildet, die den Innenraum des Leitungsabschnitts durchgreift, der Systemtrenner ist in einem seitlich an den rohrförmigen Leitungsabschnitt angesetzten rohrförmigen Stutzen angeordnet, an dem sich an dessen ablaufseitigem Ende der Anschluss befindet, und die Entwässerung des Ventilkörpers erfolgt über den Bereich des Drehgriffs. Bei dieser Bauweise steht das Außenwand-Zapfventil nach dessen Einbau in eine Außenwand nur geringfügig über die Außenwand vor. Der Leitungsabschnitt muss von der Oberfläche der Außenwand nach außen hin nur so weit überstehen, dass der rohrförmige Stutzen daran befestigt und in radialer Richtung davon abstehen kann. Der möglichst kurze Überstand des Ventilkörpers über die Außenwand bedeutet nur geringe Wärmeverluste des Gebäudes durch das Außenwand-Zapfventil nach Art einer Wärmebrücke. Auf die Stirnseite des Leitungsabschnitts des Ventilkörpers und der darin eingedrehten Gewindehülse ist dann unmittelbar der Drehgriff aufgesetzt. In dieser Position ist dieser gut betätigbar. Die im Leitungsabschnitt befindliche Flüssigkeit kann gut ablaufen, wenn das Außenwand-Zapfventil so in die Außenwand eingebaut wird, dass das im Ventilkörper befindliche Wasser gut durch die Gewindehülse nach außen ablaufen kann.

Nach einer Ausgestaltung der Erfindung ist auf das nach außen weisende Ende des Leitungsabschnitts stirnseitig ein aus einem Gussteil hergestelltes Ventilgehäuse aufgesetzt, in dem das drehgriffseitige Ende der Betätigungsstange mündet, das Ventilgehäuse weist einen Anschlusstutzen auf, in den die Gewindehülse eingedreht ist, der Drehgriff ist drehfest auf die Gewindehülse aufgesetzt und übergreift mit seiner seitlichen Schürze die Gewindehülse und den Anschlusstutzen zumindest teilweise, der Drehgriff umgrenzt in dem Zwischenraum zwischen der Schürze und den Umfangsflächen der Gewindehülse und des Anschlussstutzens einen Durchflusskanal für aus der Gewindehülse austretendes Wasser, und das Gussteil weist einen Ansatzstutzen auf, über den es mit dem Systemtrenner verbunden ist. Das Gussteil ist kostengünstig herstellbar, es ist ausreichend betriebssicher und leckfrei. Der Innenraum kann strömungsgünstig gestaltet werden, so dass trotz der Richtungsumkehr der hindurchströmenden Flüssigkeit die dabei auftretenden Druckverluste gering gehalten werden.

Nach einer Ausgestaltung der Erfindung ist der Systemtrenner in einer als Gussteil ausgebildeten Aufnahmeglocke angeordnet. Das Gussteil kann kostengünstig hergestellt werden, ist lecksicher und eröffnet nach dessen geeigneter drehender und/oder fräsender Bearbeitung die notwendigen Anbau- und Befestigungsmöglichkeiten. Das Gussteil hat eine zumindest annähernd zylindrische Grundform mit zulauf- und ablaufseitigen Öffnungen. Es bildet nach einer Ausgestaltung der Erfindung auch einstückig den Anschluss aus, an dem Abführsysteme zur Ableitung der Flüssigkeit angeschlossen werden können, wie beispielsweise einen Kronenrand mit einem Innengewinde, in den ein Anschlussstück eingeschraubt werden kann.

Nach einer Ausgestaltung der Erfindung sind die als Gussteil ausgebildeten Aufnahmeglocke und das als Gussteil hergestellte Ventilgehäuse durch einen Rohrleitungsabschnitt miteinander verbunden. Der entsprechende Rohrabschnitt kann einfach und betriebssicher montiert werden, so dass die Herstellung des Außenwand-Zapfventils insgesamt günstig ist.

Nach einer Ausgestaltung der Erfindung sind das Ventilgehäuse und die Aufnahmeglocke zur Aufnahme des Systemtrenners in einem gemeinsamen einteiligen Gussgehäuse ausgebildet. Ein einteiliges Gussgehäuse ermöglicht die Integration aller Wasserablauf- und Systemtrenner-Funktionen des Außenwand-Zapfventils in ein einziges Bauteil, das entsprechend robust und betriebssicher ausgeführt werden kann.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Gesamtansicht von schräg oben auf ein Außenwand-Zapfventil,
- Fig. 2:: eine Schnittansicht durch den Zusammenbau des Ventilgehäuses mit der Gewindehülse und dem Ventilstift, in der das Schließventil geöffnet ist,
- Fig. 3:: eine vergrößerte Ansicht des Schließventils, und
- Fig. 4:: eine Schnittansicht durch den Zusammenbau des Ventilgehäuses mit einem geschlossenen Schließventil.

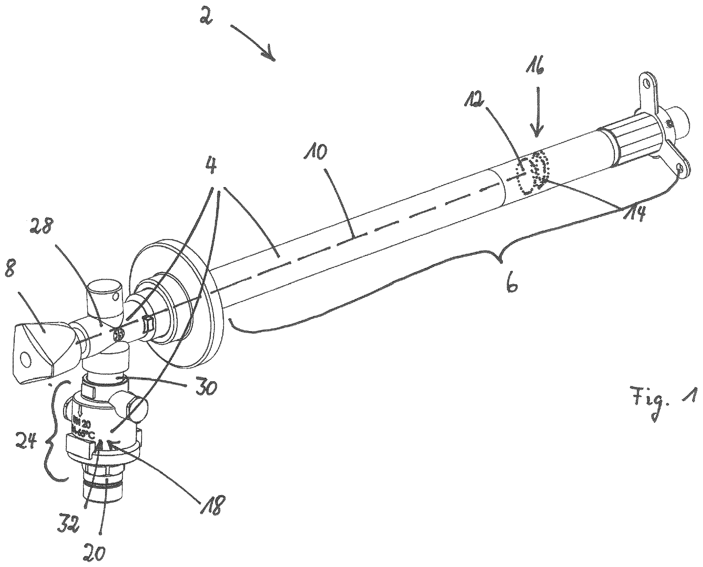

In Fig. 1 ist eine Ansicht auf ein Außenwand-Zapfventil 2 gezeigt. Der Ventilkörper 4 des Außenwand-Zapfventils 2 weist einen Leitungsabschnitt 6 auf, dessen zulaufseitiger Leitungsschaft gegenüber einem herkömmlichen Zapfventil erheblich verlängert ist. Auf der nach außen weisenden Seite des Außenwand-Zapfventils 2 ist ein Drehgriff 8 aufgesetzt, mit dem das Außenwand-Zapfventil 2 auf- und zugedreht werden kann. Dazu ist der Drehgriff 8 drehfest mit einer Gewindehülse 9 verbunden, die in Fig. 1 nicht gezeigt ist. In der Gewindehülse 9 ist ein Ventilstift 11 angeordnet, der bei einer entsprechenden Eindrehbewegung die im Ventilkörper 4 vorhandene Betätigungsstange 10 bewegt. Die Betätigungsstange 10 ist in der Fig. 1 in einer gestrichelten Linie dargestellt. Am zulaufseitigen Ende der Betätigungsstange 10 ist ein gepunktet angedeutetes Verschließelement 12 aufgesetzt, das bei einer Drehbewegung der Betätigungsstange 10 in axialer Richtung beweglich ist. Dabei kann das Verschließelement 12, das in Fig. 1 nur angedeutet dargestellt ist, auf einen ebenfalls nur gepunktet angedeuteten Ventilsitz 14 aufgesetzt werden, um das Außenwand-Zapfventil 2 dichtend zu schließen. Soll von der Zulaufseite her Wasser durch das Außenwand-Zapfventil 2 laufen, wird der auf die Betätigungsstange 10 von der Gewindehülse 9 aufgebrachte Anpressdruck verringert, indem die Gewindehülse 9 mit dem Drehgriff 8 aus dem Ventilkörper 4 herausgedreht wird. Das Verschließelement 12 wird dann durch den Wasserdruck des in der Zulaufleitung anstehenden Wassers vom Ventilsitz 14 abgehoben, so dass dadurch das Außenwand-Zapfventil 2 geöffnet ist. Das Verschließelement 12 und der Ventilsitz 14 bilden zusammen einen Leitungsverschluss 16.

Durch die Verlängerung des Leitungsabschnitts 6 ist der Leitungsverschluss 16 so weit nach innen in das Mauerwerk einer Außenwand eines Gebäudes hineinverlagert, dass er jenseits der Frostgrenze liegt und nicht einfrieren kann. Der Leitungsverschluss 16 des Außenwand-Zapfventils 2 ist dadurch frostsicher. Um eine ausreichende Verlagerung des Leitungsverschlusses 16 zum Innenraum des Gebäudes hin zu erreichen, ist es sinnvoll, den Leitungsverschluss 16 möglichst nahe zum zulaufseitigen Ende des Leitungsabschnittes 6 hin anzuordnen. Die Länge des Leitungsabschnitts 6 wird vom Fachmann so gewählt, dass eine ausreichende Frostsicherheit des Außenwand-Zapfventils 2 erreicht wird.

Der Ventilkörper 4 des Außenwand-Zapfventils 2 umfasst auch einen Leitungsabschnitt, in dem ein Systemtrenner 18 angeordnet ist. Der Systemtrenner 18 dient dem Zweck, einen Rücklauf von Flüssigkeit aus der Leitung, die an den Anschluss 20 angeschlossen ist, in den Ventilkörper 4 und das zulaufseitige Leitungsnetz zu verhindern. Der Systemtrenner 18 befindet sich in einem rohrförmigen Stutzen 24.

Zum Ventilkörper 4 des Außenwand-Zapfventils 2 gehört auch das Ventilgehäuse 28, an dem die Gewindehülse 9 und der darauf aufgesetzte Drehgriff 8 befestigt sind. Im Ausführungsbeispiel fließt die aus dem Leitungsabschnitt 6 zuströmende Flüssigkeit in einem Bogen in Richtung des rohrförmigen Stutzens 24. Das Ventilgehäuse 28 und der rohrförmige Stutzen 24 sind durch einen Rohrleitungsabschnitt 30 miteinander verbunden.

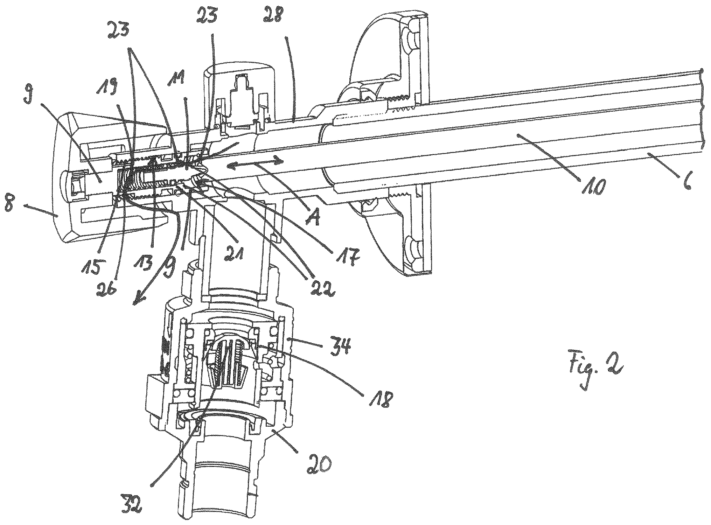

In Fig. 2 ist eine Schnittansicht durch den Zusammenbau des Ventilgehäuses 28 und den Systemtrenner 18 gezeigt. Der Systemtrenner 18 ist in einer Aufnahmeglocke 34 angeordnet. Kernbestandteil des Systemtrenners 18 ist das Durchlaufventil 32, das den Durchlauf der Flüssigkeit von der Zulaufseite her gestattet, einen Rückfluss der Flüssigkeit in den Ventilkörper 4 allerdings verhindert. In der in Fig. 2 gezeigten Schließstellung des Durchlaufventils 32 verhindert es aber auch den Abfluss der im Ventilkörper 4 befindlichen Flüssigkeit.

In der Schnittansicht in Fig. 2 ist das drehgriffseitige Ende der Betätigungsstange 10 gut erkennbar. Die Stirnseite der Betätigungsstange 10 steht in Eingriff mit dem Ventilstift 11, der in der Gewindehülse 9 gehalten ist. Mit dem Drehgriff 8 ist die Gewindehülse 9 so weit mit ihrem Außengewinde 13, das sich auf dem ventilkörperseitigen Innengewinde 15 abstützt, auf die Betätigungsstange 10 zu in den Ventilkörper 4 eingeschraubt worden, dass der Ventilstift 11 gegen die Kraft der kompressiblen Feder 19 in den Aufnahmeraum 17 eingedrückt ist. In Fig. 2 befindet sich der Ventilstift 11 in einer zweiten Stellung, in der er mit einer am Ventilstift 11 angeordneten Gleitdichtung 21 nicht mehr dichtend an einer ringförmig umlaufende Verengung 22 des Innendurchmessers zur benachbarten Innenoberfläche des Aufnahmeraums 17 anliegt. Dadurch ist es möglich, dass das im Innenraum des Ventilkörpers 4 befindliche Wasser durch den sich an dem Ventilstift 11 entlang und zwischen dem Ventilstift 11 und der ringförmig umlaufenden Verengung 22 durch den Aufnahmeraum 17 erstreckenden Durchflusskanal 23 entlang zu den Entwässerungsöffnungen 26 gelangt, an denen es aus der Gewindehülse 9 ins Freie austritt und abläuft. Der Weg, den das aus dem Ventilkörper 4 austretende Wasser nimmt, ist durch den geschwungenen Pfeil in Fig. 2 angedeutet.

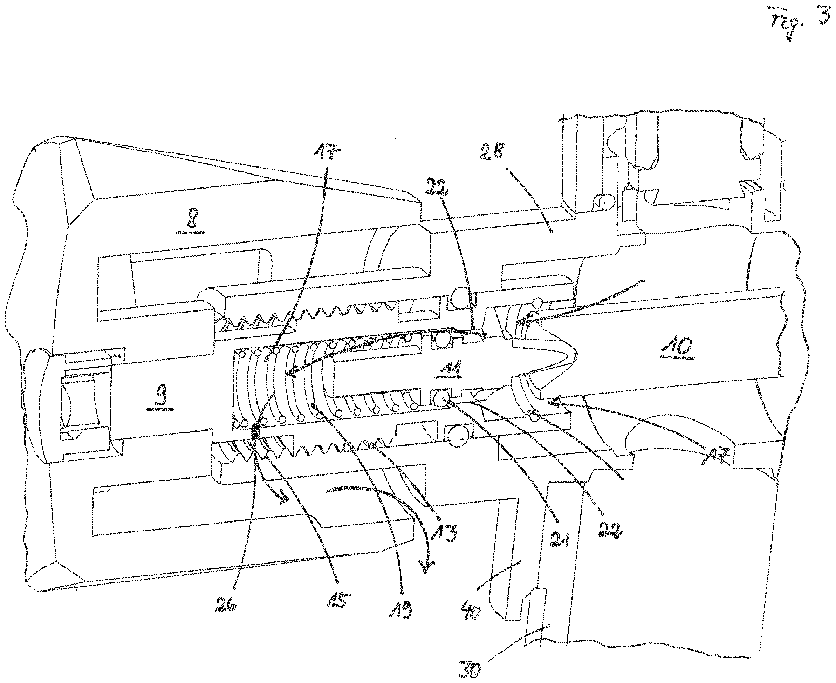

Die Fig. 3 zeigt eine vergrößerte Darstellung des Schließventil-Bereichs, in der sich der Ventilstift 11 wie in der in Fig. 2 gezeigt in der zweiten Stellung befindet, die eine Entwässerung des Innenraums des Ventilkörpers 4 ermöglicht.

In dem in Fig. 2 dargestellten Ausführungsbeispiel ist der rohrförmige Stutzen 24, in dem der Systemtrenner 18 angeordnet ist, als eine Aufnahmeglocke 34 ausgestaltet, die beispielsweise als Gussteil hergestellt werden kann. Im Ausführungsbeispiel ist auch das Ventilgehäuse 28 als Gussteil hergestellt. In dem Ventilgehäuse befindet sich die Betätigungsstange 10, die über die Gewindehülse 9 mit dem darin gehaltenen Ventilstift 11 mit dem darauf aufgesetzten Drehgriff 8 verbunden ist. Das Ventilgehäuse 28 verfügt über einen Ansatzstutzen 40, über den es mit der Aufnahmeglocke 32 und dem darin angeordneten Systemtrenner 18 verbunden ist. Die Aufnahmeglocke 34 und das Ventilgehäuse 28 sind im Ausführungsbeispiel durch einen Rohrleitungsabschnitt 30 miteinander verbunden.

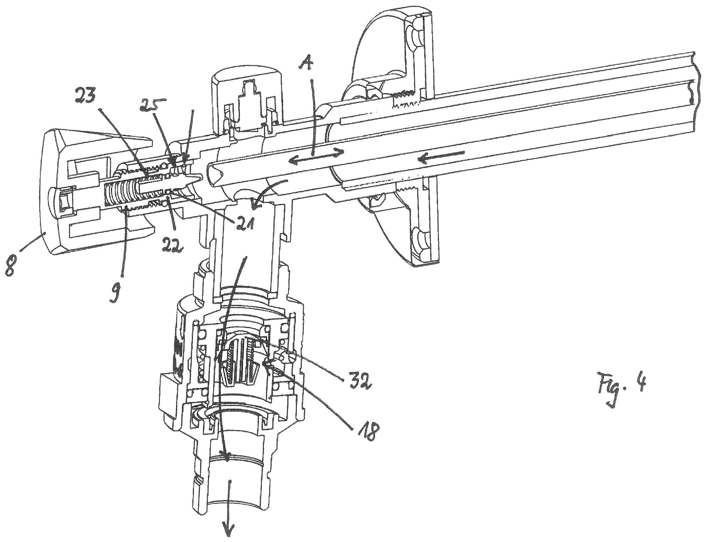

Die Fig. 4 unterscheidet sich von der Fig. 2 nur dadurch, dass das Schließventil in seiner geschlossenen Stellung dargestellt ist, in der sich der Ventilstift 11 in seiner ersten Stellung befindet und mit seinem vorderen Stützelement 25 von der Feder 19 auf dem Ventilsitz aufgepresst gehalten ist. Die Gleitringdichtung 21 liegt dichtend an der Oberfläche der Verengung 22 an, so dass die im Ventilkörper 4 befindliche Flüssigkeit nicht mehr durch den Durchflusskanal 23 in die Entwässerungsöffnungen 26 abfließen kann. Die Gewindehülse 9 ist so weit aufgedreht, dass der Ventilstift 11 von der Betätigungsstange 10 abgehoben ist, so dass sich diese in axialer Richtung A frei bewegen kann. Hier sei bemerkt, dass der Ventilstift 11 nicht zwingend von der Betätigungsstange 10 abgehoben sein muss. Die Betätigungsstange 10 kann den Leistungsverschluss 16 auch öffnen, wenn sie sich noch in Kontakt mit dem Ventilstift 11 befindet, aber bereits Wasser durch den geöffneten Leitungsverschluss 16 in das Innere des Ventilkörpers 4 einströmt. Ist der Innenraum des Ventilkörpers 4 bei geöffnetem Leitungsverschluss 16 aus dem zulaufenden Wasser einem erhöhten Innendruck ausgesetzt, drückt der erhöhte Innendruck aus dem Innenraum des Ventilkörpers 4 das Durchlaufventil 32 auf, so dass die im Ventilkörper 4 befindliche Flüssigkeit dann durch den Systemtrenner 18 hindurch strömt, wie es die in der Fig. 4 eingezeichneten Pfeile andeuten.

Die Erfindung ist nicht auf die vorstehenden Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

### Bezugsziffernliste

- 2: Außenwand-Zapfventil
- 4: Ventilkörper
- 6: Leitungsabschnitt
- 8: Drehgriff
- 9: Gewindehülse
- 10: Betätigungsstange
- 11: Ventilstift
- 12: Verschließelement
- 13: Außengewinde
- 14: Ventilsitz
- 15: Innengewinde
- 16: Leitungsverschluss
- 17: Aufnahmeraum
- 18: Systemtrenner
- 19: Feder
- 20: Anschluss
- 21: Gleitringdichtung
- 22: Verengung
- 23: Durchflusskanal
- 24: rohrförmiger Stutzen
- 25: Stützelement
- 26: Entwässerungsöffnung
- 28: Ventilgehäuse
- 30: Rohrleitungsabschnitt
- 32: Durchlaufventil
- 34: Aufnahmeglocke
- 40: Ansatzstutzen

## Patentansprüche

1. Außenwand-Zapfventil (2) mit einem Ventilkörper (4), dessen zulaufseitiger Leitungsschaft einen um mehrere cm verlängerten Leitungsabschnitt (6) aufweist, der im Einbauzustand eine in die Gebäudewand hineinreichende Leitungsstrecke ausbildet, einem an der im Einbauzustand nach außen weisenden Seite des Außenwand-Zapfventils (2) angeordneten Drehgriff (8), der drehfest mit einer im Ventilkörper (4) gelagerten Gewindehülse (9) verbunden ist, die an ihrem dem Drehgriff (8) abgewandten Ende auf eine bewegliche Betätigungsstange (10) mit einem damit verbundenen Verschließelement (12) einwirkt, einem Ventilsitz (14), der in der dem Drehgriff (8) abgewandten Hälfte des Leitungsschaftes im Ventilkörper (4) angeordnet ist, das mit der Betätigungsstange (10) bewegliche Verschließelement (12) bildet, wenn es sich in der Schließstellung befindet, mit dem Ventilsitz (14) zusammenwirkend einen Leitungsverschluss (16), und im ablaufseitigen Ende des Ventilkörpers (4) ist ein Systemtrenner (18) vor einem ablaufseitigen Anschluss (20) angeordnet, der ein Durchlaufventil (32) aufweist, das einen Flüssigkeitsablauf aus dem Ventilkörper (4) zulässt und einen Zulauf von Flüssigkeit aus dem Anschluss (20) in den Ventilkörper (4) sperrt, die Gewindehülse ist mit ihrem Außengewinde (13) in einem ventilkörperseitigen Innengewinde (15) in einer axialen Richtung (A) drehbeweglich gehalten und weist einen Aufnahmeraum (17) auf, in dem ein in axialer Richtung (A) beweglicher Ventilstift (11) angeordnet ist, der von einer im Aufnahmeraum (17) befindlichen, in axialer Richtung (A) kompressiblen Feder (19) gegen einen im Aufnahmeraum (17) ausgebildeten Ventilsitz in einer ersten Stellung relativ zur Gewindehülse (9) gedrückt gehalten ist, im Aufnahmeraum (17) ist eine ringförmig umlaufende Verengung (22) des Innendurchmessers zur benachbarten Innenoberfläche des Aufnahmeraums (17) ausgebildet, an deren Oberfläche der Ventilstift (11) in seiner ersten Stellung mit einer am Ventilstift (11) angeordneten Gleitdichtung (21) dichtend anliegt, bei einer ersten Einschraubbewegung der Gewindehülse (9) in den Ventilkörper (4) bewegt der in der Gewindehülse (9) befindliche Ventilstift (11) die Betätigungsstange (10) aus einer Offenstellung in eine Schließstellung, in der der Leitungsverschluss (16) geschlossen ist, in der Schließstellung der Betätigungsstange (10) bildet diese einen Anschlag für den Ventilstift (11), durch die der Ventilstift (11) gegen eine fortgesetzte Bewegung in axialer Richtung (A) blockiert ist, nach einer über die erste Einschraubbewegung fortgesetzten zweiten Einschraubbewegung ist die Gewindehülse (9) gegen die Federkraft der kompressiblen Feder (19) verlagert und der Ventilstift (11) tiefer in den Aufnahmeraum (17) hineingedrückt, in der sich der Ventilstift (11) relativ zur Gewindehülse (9) in einer zweiten Stellung befindet, in der zweiten Stellung ist die Gleitdichtung (21) aus der ringförmig umlaufenden Verengung (22) des Innendurchmessers herausgeschoben und zwischen dem Ventilstift (11) und der ringförmig umlaufenden Verengung (22) ein Durchflusskanal (23) freigegeben, die Gewindehülse (9) weist in ihrem von der ringförmig umlaufenden Verengung (22) des Innendurchmessers in Richtung des Drehgriffs (8) abgewandten Abschnitt Entwässerungsöffnungen (26) zur Entwässerung des Aufnahmeraums (17) auf, und zwischen dem Ventilstift (11) und der Innenoberfläche des Aufnahmeraums (17) der Gewindehülse (9) ist ein Durchflusskanal (23) ausgebildet, der in der zweiten Stellung des Ventilstiftes (11) den Innenraum des Ventilkörpers (4) mit den Entwässerungsöffnungen (26) verbindet.

2. Außenwand-Zapfventil (2) nach Anspruch 1, **dadurch gekennzeichnet, dass** der Ventilkörper (4) den rohrförmigen Leitungsabschnitt (6) aufweist, an dessen zulaufseitigem Ende der Leitungsverschluss (16) ausgebildet und auf dessen entgegengesetztem Ende der Drehgriff (8) aufgesetzt ist, die Betätigungsstange (10) als Stange ausgebildet ist, die den Innenraum des Leitungsabschnitts (6) durchgreift, der Systemtrenner (18) in einem seitlich an den rohrförmigen Leitungsabschnitt (6) angesetzten rohrförmigen Stutzen (24) angeordnet ist, an dem sich an dessen ablaufseitigem Ende der Anschluss (20) befindet, und die Entwässerung des Ventilkörpers (4) über den Bereich des Drehgriffs (8) erfolgt.

3. Außenwand-Zapfventil (2) nach Anspruch 1 oder 2, **dadurch gekennzeichnet, dass** auf das nach außen weisende Ende des Leitungsabschnitts (6) stirnseitig ein aus einem Gussteil hergestelltes Ventilgehäuse (28) aufgesetzt ist, in dem das drehgriffseitige Ende der Betätigungsstange (10) mündet, das Ventilgehäuse (28) weist einen Anschlussstutzen auf, in den die Gewindehülse (9) eingedreht ist, der Drehgriff (8) ist drehfest auf die Gewindehülse (9) aufgesetzt und übergreift mit seiner seitlichen Schürze die Gewindehülse (9) und den Anschlussstutzen zumindest teilweise, der Drehgriff (8) umgrenzt in dem Zwischenraum zwischen der Schürze und den Umfangsflächen der Gewindehülse (9) und des Anschlussstutzens den Durchflusskanal (23) für aus der Gewindehülse (9) austretendes Wasser, und das Gussteil weist einen Ansatzstutzen (40) auf, über den es mit dem Systemtrenner (18) verbunden ist.

4. Außenwand-Zapfventil (2) nach Anspruch 2 oder 3, **dadurch gekennzeichnet, dass** der Systemtrenner (18) in einer als Gussteil ausgebildeten Aufnahmeglocke (34) angeordnet ist.

5. Außenwand-Zapfventil (2) nach dem vorhergehenden Anspruch,
**dadurch gekennzeichnet, dass** die als Gussteil ausgebildeten Aufnahmeglocke (34) und das als Gussteil hergestellte Ventilgehäuse (28) durch einen Rohrleitungsabschnitt (30) miteinander verbunden sind.

6. Außenwand-Zapfventil (2) nach den Ansprüchen 3 und 4,
**dadurch gekennzeichnet, dass** das Ventilgehäuse (28) und die Aufnahmeglocke (34) zur Aufnahme des Systemtrenners (18) in einem gemeinsamen einteiligen Gussgehäuse ausgebildet sind.

## Claims

1. External wall tap valve (2) comprising a valve body (4), the inlet-side line shaft of which has a line portion (6) extended by several cm which, in the installed state, forms a line section that extends into the building wall, a rotary handle (8) which is arranged on the side of the external wall tap valve (2) facing outward in the installed state and is connected for conjoint rotation with a threaded sleeve (9) which is mounted in the valve body (4) and, at its end remote from the rotary handle (8), acts on a movable actuating rod (10) with a closing element (12) connected thereto, a valve seat (14) which is arranged in the half of the line shaft in the valve body (4) that is remote from the rotary handle (8), the closing element (12) movable with the actuating rod (10) forms, when in the closed position, a line closure (16) in cooperation with the valve seat (14), and a system separator (18) is arranged in the outlet-side end of the valve body (4) in front of an outlet-side connector (20) that has a flow valve (32) which allows liquid to flow out of the valve body (4) and blocks an inflow of liquid from the connector (20) into the valve body (4), the threaded sleeve is held with its external thread (13) in a valve-body-side internal thread (15) so as to be rotatable in an axial direction (A) and has a receiving space (17) in which a valve pin (11) movable in the axial direction (A) is arranged, which pin is held under pressure in a first position relative to the threaded sleeve (9) against a valve seat formed in the receiving space (17) by a spring (19) which is located in the receiving space (17) and is compressible in the axial direction (A), in the receiving chamber (17) an annularly circumferential constriction (22) of the inner diameter to the adjacent inner surface of the receiving chamber (17) is formed, against the surface of which the valve pin (11) sealingly abuts in its first position with a sliding seal (21) arranged on the valve pin (11), in a first screwing-in movement of the threaded sleeve (9) into the valve body (4), the valve pin (11) located in the threaded sleeve (9) moves the actuating rod (10) from an open position into a closed position in which the line closure (16) is closed, in the closed position of the actuating rod (10) said rod forms a stop for the valve pin (11), by which the valve pin (11) is blocked against continued movement in the axial direction (A), after a second screwing-in movement continued beyond the first screwing-in movement, the threaded sleeve (9) is displaced against the spring force of the compressible spring (19) and the valve pin (11) is pressed deeper into the receiving space (17), in which the valve pin (11) is located in a second position relative to the threaded sleeve (9), in the second position the sliding seal (21) is pushed out of the annularly circumferential constriction (22) of the inner diameter and a flow channel (23) is released between the valve pin (11) and the annularly circumferential constriction (22), the threaded sleeve (9) has drainage openings (26), in its portion facing away from the annularly circumferential constriction (22) of the inner diameter in the direction of the rotary handle (8), for draining the receiving space (17), and a flow channel (23) is formed between the valve pin (11) and the inner surface of the receiving space (17) of the threaded sleeve (9), which channel connects the interior of the valve body (4) to the draining openings (26) in the second position of the valve pin (11).

2. External wall tap valve (2) according to claim 1, **characterized in that** the valve body (4) comprises the tubular line portion (6), on the inflow-side end of which the line closure (16) is formed and on the opposite end of which the rotary handle (8) is placed, the actuating rod (10) is designed as a rod which passes through the interior of the line portion (6), the system separator (18) is arranged in a tubular nozzle (24) which is attached laterally to the tubular line portion (6) and on which the connector (20) is located on the outlet-side end thereof, and the drainage of the valve body (4) takes place via the region of the rotary handle (8).

3. External wall tap valve (2) according to claim 1 or 2, **characterized in that** a valve housing (28) produced from a cast part is placed on the end face of the outwardly facing end of the line portion (6), in which valve housing the rotary-handle-side end of the actuating rod (10) opens, the valve housing (28) has a connection nozzle into which the threaded sleeve (9) is screwed, the rotary handle (8) is mounted on the threaded sleeve (9) in a rotationally fixed manner and at least partially engages over the threaded sleeve (9) and the connection nozzle by means of its lateral apron, the rotary handle (8) defines, in the space between the apron and the circumferential surfaces of the threaded sleeve (9) and of the connection nozzle, the flow channel (23) for water emerging from the threaded sleeve (9), and the cast part has an attachment (40) via which it is connected to the system separator (18).

4. External wall tap valve (2) according to claim 2 or 3, **characterized in that** the system separator (18) is arranged in a receiving bell (34) formed as a cast part.

5. External wall tap valve (2) according to the preceding claim,
**characterized in that** the receiving bell (34) formed as a cast part and the valve housing (28) produced as a cast part are interconnected by a pipeline portion (30).

6. External wall tap valve (2) according to claims 3 and 4, **characterized in that** the valve housing (28) and the receiving bell (34) are designed to receive the system separator (18) in a common one-piece cast housing.

## Revendications

1. Soupape de distribution pour paroi extérieure (2) comportant un corps de soupape (4) dont la tige de conduite côté arrivée présente une section de conduite (6) prolongée de plusieurs cm qui, à l'état monté, forme un tronçon de conduite pénétrant dans la paroi de bâtiment, une poignée rotative (8) disposée sur le côté orienté vers l'extérieur à l'état monté de la soupape de distribution pour paroi extérieure (2), laquelle poignée rotative est reliée de manière solidaire en rotation à un manchon fileté (9) monté dans le corps de soupape (4), lequel manchon fileté agit, au niveau de son extrémité opposée à la poignée rotative (8), sur une barrette d'actionnement (10) mobile avec un élément de fermeture (12) relié à celle-ci, un siège de soupape (14), lequel est disposé dans la moitié de la tige de conduite opposée à la poignée rotative (8) dans le corps de soupape (4) et, lorsqu'il se trouve dans la position de fermeture, forme avec l'élément de fermeture (12) mobile avec la tige d'actionnement (10) une fermeture de conduite (16) coopérant avec le siège de soupape (14), et un disconnecteur de système (18) est disposé dans l'extrémité côté évacuation du corps de soupape (4) devant un raccord (20) côté évacuation, lequel disconnecteur de système présente une soupape de passage (32) qui permet une évacuation de liquide hors du corps de soupape (4) et bloque une arrivée de liquide depuis le raccord (20) dans le corps de soupape (4), le manchon fileté est maintenu mobile en rotation avec son filetage extérieur (13) dans un filetage intérieur (15) côté corps de soupape dans une direction axiale (A) et présente un espace de réception (17) dans lequel est disposée une broche de soupape (11) mobile dans la direction axiale (A), laquelle est maintenue de manière à être compressée dans une première position par rapport au manchon fileté (9) par un ressort compressible (19) dans la direction axiale (A) et situé dans l'espace de réception (17) contre un siège de soupape réalisé dans l'espace de réception (17), dans l'espace de réception (17) est réalisé un rétrécissement circonférentiel annulaire (22) du diamètre intérieur par rapport à la surface intérieure voisine de l'espace de réception (17), sur la surface duquel la broche de soupape (11), dans sa première position, repose de manière étanche avec un joint d'étanchéité coulissant (21) disposé sur la broche de soupape (11), lors d'un premier mouvement de vissage du manchon fileté (9) dans le corps de soupape (4), la broche de soupape (11) située dans le manchon fileté (9) déplace la barrette d'actionnement (10) d'une position d'ouverture vers une position de fermeture dans laquelle la fermeture de conduite (16) est fermée, dans la position de fermeture de la barrette d'actionnement (10), celle-ci forme une butée pour la broche de soupape (11), laquelle butée bloque un mouvement prolongé de la broche de soupape (11) dans la direction axiale (A), après un second mouvement de vissage se prolongeant au-delà du premier mouvement de vissage, le manchon fileté (9) est déplacé contre la force de ressort du ressort compressible (19) et la broche de soupape (11) est enfoncée plus profondément dans l'espace de réception (17), dans lequel espace de réception la broche de soupape (11) est située dans une seconde position par rapport au manchon fileté (9), dans la seconde position, le joint d'étanchéité coulissant (21) est poussé hors du rétrécissement circonférentiel annulaire (22) du diamètre intérieur et un canal d'écoulement (23) est libéré entre la broche de soupape (11) et le rétrécissement circonférentiel annulaire (22), le manchon fileté (9) présente, dans sa section opposée au rétrécissement circonférentiel annulaire (22) du diamètre intérieur en direction de la poignée rotative (8), des ouvertures de drainage (26) permettant de drainer l'espace de réception (17), et un canal d'écoulement (23) est réalisé entre la broche de soupape (11) et la surface intérieure de l'espace de réception (17) du manchon fileté (9), lequel canal d'écoulement, dans la seconde position de la broche de soupape (11), relie l'espace intérieur du corps de soupape (4) aux ouvertures de drainage (26).

2. Soupape de distribution pour paroi extérieure (2) selon la revendication 1, **caractérisée en ce que** le corps de soupape (4) présente la section de conduite (6) tubulaire, au niveau de l'extrémité côté arrivée de laquelle la fermeture de conduite (16) est réalisée, et sur l'extrémité opposée de laquelle la poignée rotative (8) est placée, la barrette d'actionnement (10) est réalisée en tant que barrette traversant l'espace intérieur de la section de conduite (6), le disconnecteur de système (18) est disposé dans une tubulure (24) tubulaire rapportée latéralement à la section de conduite (6) tubulaire, sur laquelle tubulure est situé le raccord (20) au niveau de son extrémité côté évacuation, et le drainage du corps de soupape (4) s'effectue dans la zone de la poignée rotative (8).

3. Soupape de distribution pour paroi extérieure (2) selon la revendication 1 ou 2, **caractérisée en ce qu'**un boîtier de soupape (28) fabriqué à partir d'une pièce moulée est monté sur l'extrémité orientée vers l'extérieur de la section de conduite (6) côté face frontale, dans lequel boîtier débouche l'extrémité côté poignée rotative de la barrette d'actionnement (10), le boîtier de soupape (28) présente une tubulure de raccordement dans laquelle est vissé le manchon fileté (9), la poignée rotative (8) est montée solidaire en rotation sur le manchon fileté (9) et recouvre au moins partiellement le manchon fileté (9) et la tubulure de raccordement avec sa jupe latérale, la poignée rotative (8) délimite le canal d'écoulement (23) pour de l'eau sortant du manchon fileté (9) dans l'espace intermédiaire entre la jupe et les surfaces circonférentielles du manchon fileté (9) et de la tubulure de raccordement, et la pièce moulée présente un embout tubulaire (40) par l'intermédiaire duquel elle est reliée au disconnecteur de système (18).

4. Soupape de distribution pour paroi extérieure (2) selon la revendication 2 ou 3, **caractérisée en ce que** le disconnecteur de système (18) est disposé dans une cloche de réception (34) réalisée en tant que pièce moulée.

5. Soupape de distribution pour paroi extérieure (2) selon la revendication précédente, **caractérisée en ce que** la cloche de réception (34) réalisée en tant que pièce moulée et le boîtier de soupape (28) fabriqué en tant que pièce moulée sont reliés l'un à l'autre par une section de canalisation (30).

6. Soupape de distribution pour paroi extérieure (2) selon les revendications 3 et 4, **caractérisée en ce que** le corps de soupape (28) et la cloche de réception (34) sont réalisés dans un boîtier moulé monobloc commun pour la réception du disconnecteur de système (18).
